Europäisches Patentamt

(19) European Patent Office

Office européen des brevets

(11) Publication number : **0 246 200 B1**

(12) # EUROPEAN PATENT SPECIFICATION

(45) Date of publication of patent specification :
04.09.91 Bulletin 91/36

(51) Int. Cl.⁵ : **B61F 5/12**

(21) Application number : **87830088.8**

(22) Date of filing : **09.03.87**

(54) Friction damper for railway vehicle suspensions.

(30) Priority : **07.05.86 IT 6737586**

(43) Date of publication of application :
**19.11.87 Bulletin 87/47**

(45) Publication of the grant of the patent :
**04.09.91 Bulletin 91/36**

(84) Designated Contracting States :
**AT BE CH DE ES FR GB GR IT LI LU NL SE**

(56) References cited :
**DE-A- 1 405 624**
**US-A- 2 237 382**
**US-A- 2 348 453**
**US-A- 3 795 201**

(73) Proprietor : **FIAT FERROVIARIA SAVIGLIANO**
**S.p.A.**
**Piazza Galateri 4**
**I-12038 Savigliano (Cuneo) (IT)**

(72) Inventor : **Santanera, Oreste**
**Via Mont Cervet 38**
**I-10025 Pino Torinese Torino (IT)**

(74) Representative : **Buzzi, Franco et al**
**c/o Jacobacci-Casetta & Perani S.p.A. Via**
**Alfieri, 17**
**I-10121 Torino (IT)**

## Description

The present invention has for its subject a damper for suspensions between a supporting part and a suspended part of a railway vehicle, between which the interposition of elastic members is envisaged.

Railway vehicles subject to large variations of load (goods wagons, suburban transport vehicles, etc.) must be provided with special suspensions with characteristics which can be varied so that, in all load conditions, they have frequencies suitably adjusted both to the containment of the accelerations to which the load itself is subjected and to the containment of the forces that the vehicle exerts on the track.

These suspensions, made up of groups of springs with various characteristics, require that the motions caused by these springs are suitably damped by devices which give rise to forces the magnitudes of which (in order to avoid excesses or defects) must be proportional to the weight of the suspended part or parts, the motion of which must be limited in dependence on coefficients defined by the type of motion (for example, vertical motion, transverse motion, etc.).

Dampers known and used on railways until now, whether of a hydraulic or frictional type, have not satisfied all these conditions because their action is not proportional to the weight or because they damp only one motion (either vertical or transverse).

It has been proposed in DE-A-1 405 624 a friction damper comprising a cranked rocker lever articulated centrally to one of the supporting (or suspended) parts about a first axis and having a substantially horizontal arm which acts as a support for the end of the elastic member on the supporting (or suspended) part to which the cranked lever is articulated, the other arm of the cranked lever extending substantially vertically and carrying a first friction lining which faces a second lining. The rocker lever is articulated to the suspended part and the second friction lining is carried by a support fixed to the other (supporting) part. Such a construction is adapted to damp only vertical motions of the suspension.

The object of the present invention is to remedy the aforesaid inconvenience and to achieve a suspension damper of the type defined above, which allows the damping, with different characteristics, of two substantially orthogonal motions and also the variation of these characteristics in proportion to the weight.

In order to achieve this object, the damper according to the invention is characterised in that the second friction lining is carried by a support fixed to the supporting (or suspended) part to which the cranked lever is articulated, and in that it further comprises a substantially vertical connecting rod having one end articulated to the other of the suspended (or supporting) parts about a second axis and its opposite end connected rotatably and vertically slidably to the substantially vertical arm of the cranked lever and to the support and carrying third and fourth friction linings which cooperate respectively with the first and the second friction linings during vertical translational movements and rotations of the connecting rod resulting from vertical and transverse relative motions between the suspended and supporting parts, so as to damp these motions in a manner which is differentiated and variable as a function of the load transmitted to the cranked lever by the elastic member of the suspension.

By virtue of these characteristics, the friction damper of the invention is able to achieve an effective damping, with different characteristics, of both vertical and transverse motions, in a manner proportional to the load of the suspended part transmitted by the elastic member. In fact, upon an increase of the load, the second and third friction linings carried by the connecting rod are gripped to a greater extent between the third and fourth friction linings because of the thrust exerted by the substantially vertical arm of the cranked lever, achieving a more accentuated damping action.

On the other hand, a decrease in the weight of the suspended part results in a lesser damping action.

The difference in the damping action for the two different motions (vertical and transverse) derives from the fact that the frictional forces act directly in one case (translation of the suspended part whose damped motion is equal to the translation between the friction linings) and indirectly in the other case, through a lever arm constituted by the connecting rod.

To advantage, the damper according to the invention may be fitted to the suspension between the vehicle body, swinging beam or load-bearing beam and the chassis of the carriage or the axles, or to the suspension between the axles and the carriage chassis.

Moreover, the same elements which constitute the damper can be used as maximum travel devices for limiting movements between the two parts which they connect, which can be particularly advantageous during lifting of the vehicle.

The invention will now be described in detail with reference to the appended drawings, provided purely by way of non-limiting example, in which:

Figure 1 is a schematic front elevational view of a friction damper according to the invention, fitted to the suspension between the swinging beam and the carriage chassis of a railway vehicle.

Figure 2 is a side elevational view on the arrow II of Figure 1.

Figure 3 is a plan view on the arrow III of Figure 1.

Figure 4 is a partial perspective view of the damper.

Figure 5 is an exploded perspective view of the damper, and

Figures 6, 7 and 8 are views, analogous to Figures 1, 2 and 3, of a variant of the invention.

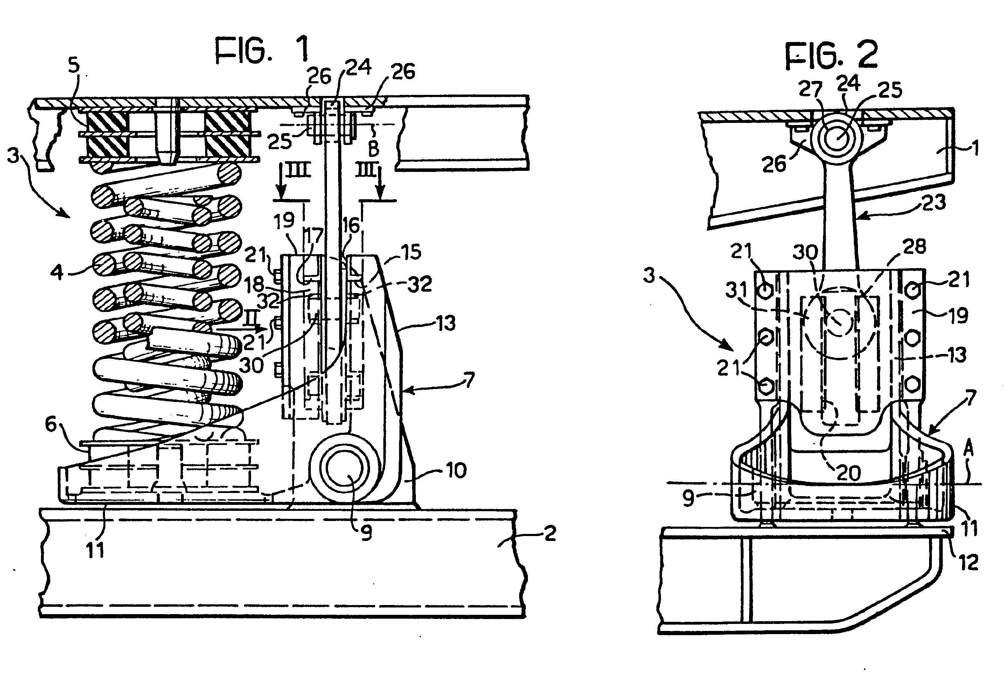

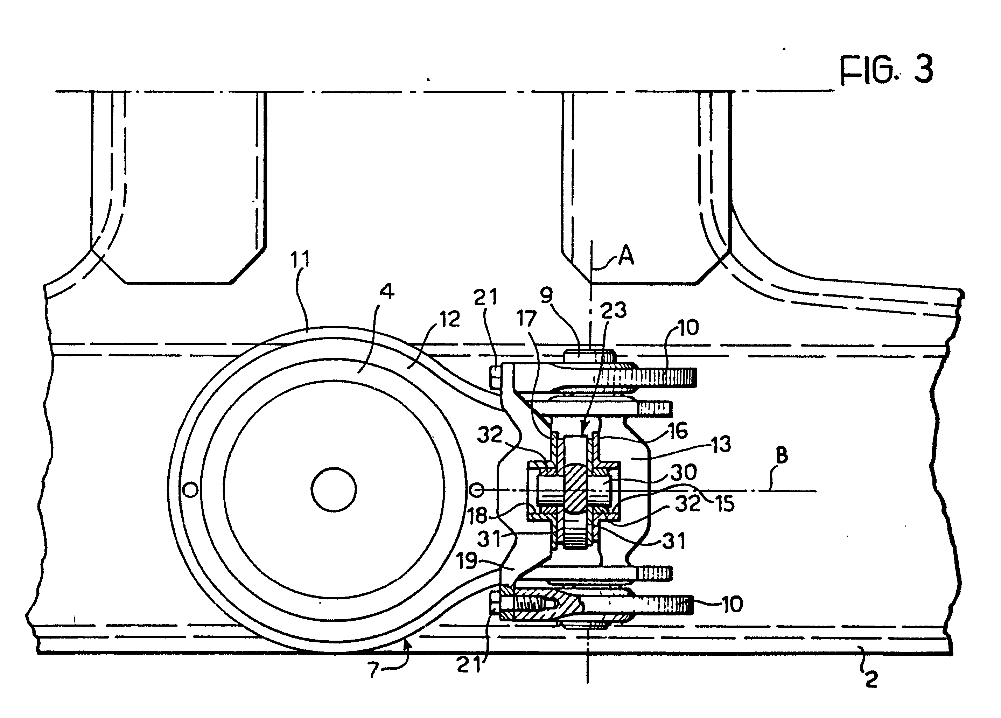

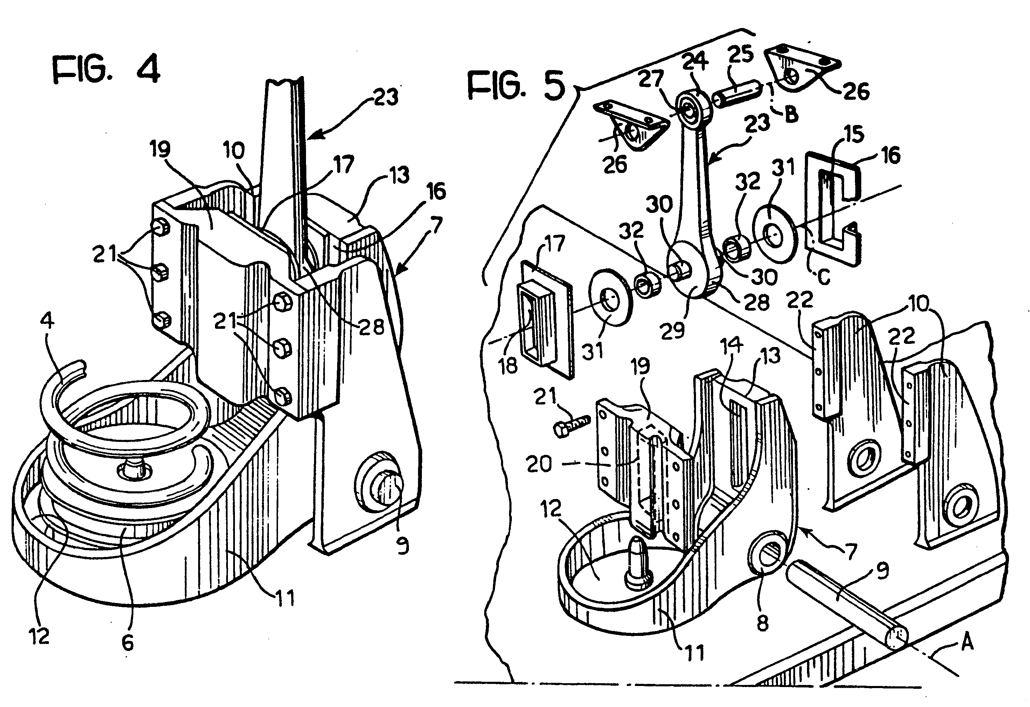

With reference to Figures 1 to 5, there is schematically indicated 1 the swinging beam associated with the body of a railway vehicle, which is suspended from the chassis 2 of the carriage of this vehicle by means of a vertical and transverse suspension including a series of suspension units, only one of which is generally indicated 3 in Figures 1 to 3.

The suspension unit 3 comprises a vertical-axis helical compression spring 4 interposed between upper elastic supports fixed to the swinging beam 1 and lower elastic supports 6 carried by a cranked rocker lever 7. This lever 7 is articulated centrally at 8 to a pivot 9 whose ends are supported by a pair of vertical plates 10 fixed to the chassis of the carriage 2 in spaced-apart positions. In the example illustrated, the axis A of the pivot 9 is parallel to the swinging beam 1, that is, orthogonal to the longitudinal axis of the vehicle.

The cranked lever 7 has a main arm 11 turned in the direction of the spring 4 and forming a base 12 for retaining the elastic supports 6, and a second arm 13 turned towards the swinging beam 1. In the arm 13 there is made a longitudinal slit 14 which corresponds to an analogous longitudinal slit 15 made in a friction lining 16 fixed, by any suitable means, to this arm 13. The friction lining 16 faces an analogous friction lining 17 which is provided with a longitudinal slit 18 identical and corresponding to the slit 15, and which is carried by a support plate 19. This plate 19 is provided with a longitudinal slit 20 corresponding to the slit 18 of the lining 17 and is fixed, for exemple by screws 21, to two connecting parts 22 of the plates 10.

A connecting rod, indicated 23, extends substantially vertically from the area between the two friction linings 16 and 17 towards the swinging beam 1. In effect, the upper end of the connecting rod 23, indicated 24, is articulated about a pin 25 carried by two supports 26 fixed, for example by screws, to the swinging beam 1. The cylindrical articulation of the connecting rod 23 to the swinging beam 1 is conveniently of a elastic type, by means of a sleeve 27 of elastomer material interposed between the pin 25 and the end 24 of the connecting rod.

The lower end of the connecting rod 23 forms an enlarged head 28 with opposite flat faces 29 of generally circular profile, from which project two pins 30 aligned on a common axis C parallel to the axis B of the pin 25. To the two faces 29 are fixed two discoidal friction linings 31 which are circular in shape and surround the respective pins 30 with the interposition of sleeves 32.

The two pins 30 are rotatably and slidably engaged with the slits 15, 18 of the friction linings 16, 17 which are inserted respectively in the slits 14 and 20 of the arm 13 of the cranked lever 7 and of the support plate 19. Because of this assembly, the friction linings 31 face the friction linings 16 and 17 and are gripped between them with a force which is variable as a function of the load transmitted by the spring 4 to the cranked lever 7. Thus, in operation, the interaction between the friction linings 16, 17 and 31 generates a friction damping effect on the vertical and transverse motions of the swinging beam 1, and hence of the vehicle body, relative to the chassis of the carriage 2. This damping is proportional to the load on the spring 4 and transmitted by the latter to the cranked lever 7, and is differentiated for the vertical or transverse movements of the body with respect to the carriage. In fact, the frictional forces (vertical and/or transverse motions) act directly in one case (translation of the swinging beam 1 equal to the translation between the damping surfaces defined by the friction linings 16, 17 and 31), and indirectly in the other case through a lever arm constituted by the shank of the connecting rod 23.

In effect, in operation, the motions of the swinging beam 1 relative to the chassis of the carriage 2 give rise to:

- vertical motions: to vertical translations between the contact surfaces of the friction linings 16, 17 and 31 and therefore to a substantially vertical force along the axis of the connecting rod 23, between the swinging beam and the chassis 2;
- transverse motions: to rotation between the contact surfaces of the linings 15, 17 and 31 and therefore to horizontal forces transmitted by the articulations 24, 25, 27 between the swinging beam 1 and chassis of the carriage 2.

As stated, these forces are different from each other, especially in dependence on the length of the connecting rod, and proportional to the weight bearing on the swinging beam 1, which is transmitted by the spring 4 to the cranked lever 7.

Although the invention has been described with reference to the suspension between the swinging beam 1 and the chassis of the carriage 2, it must be noted that it is applicable with equal advantage to the suspension between the load-bearing beam and the body of the vehicle or between the body of the vehicle and the chassis of the carriage, or to the suspension between the axles of the vehicle and the chassis of the carriage (if the vehicle has a carriage) or between the axles and the body of the vehicle (for example, in the case of a vehicle with two axles).

Moreover, the same components of the damper can be used as maximum travel devices for limiting the motions between the two connected bodies, which may be necessary during lifting of the vehicle.

It must also be noted that, although in the example illustrated the cranked lever 7 is carried by the support structure (the chassis of the carriage) and the connecting rod 23 is carried by the suspended structure (the swinging beam 1), the arrangement can be reversed with an absolutely equivalent operation. In other words, the cranked lever 7 could be articulated to the swinging beam 1, in which case the upper end of the spring 3 would react against the arm 11 of the cranked lever 7, and correspondingly the connecting rod 23 would be articulated to the chassis of the carriage 2.

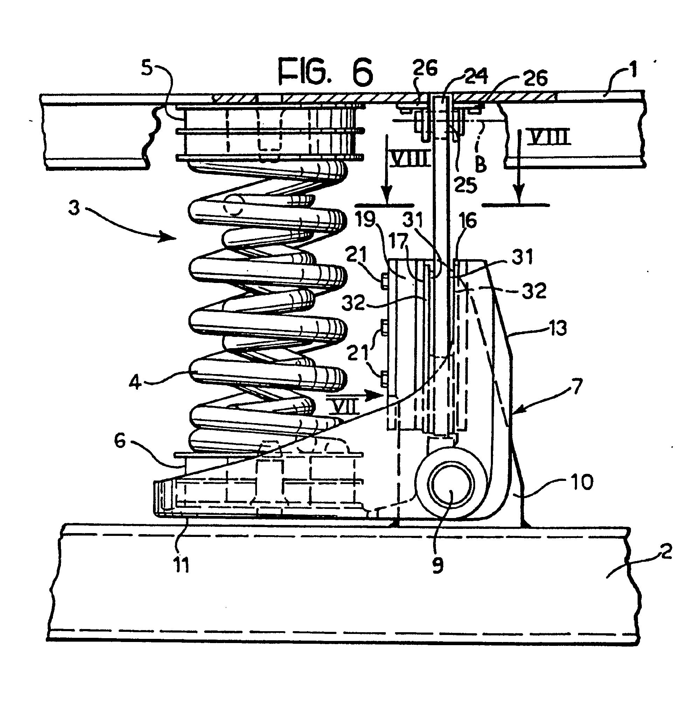

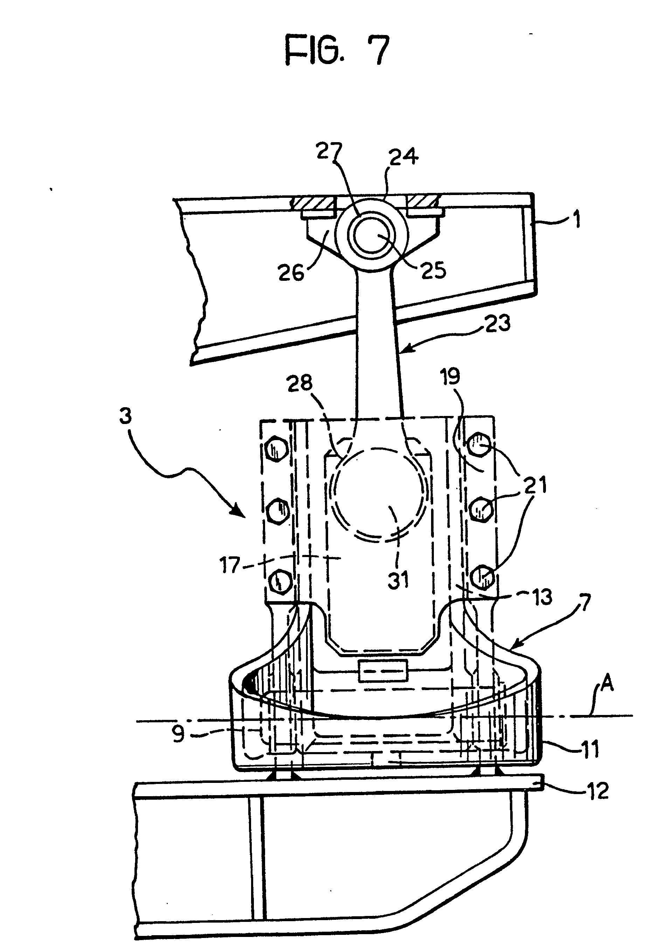

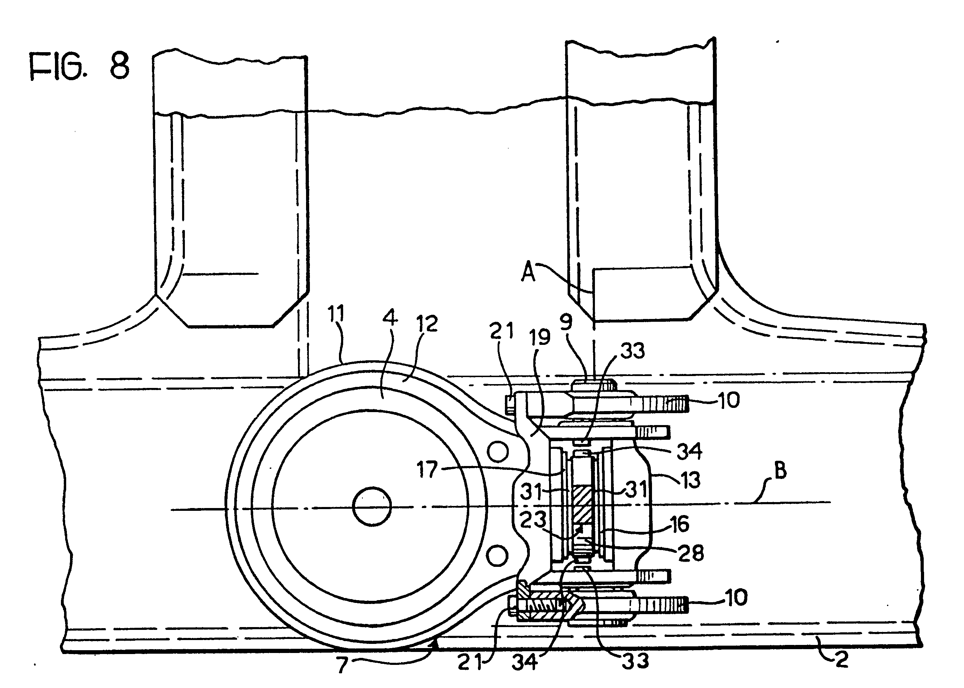

Figures 6 to 8, in which parts identical or similar to those already described are indicated with the same reference numerals, show a simplified variant of the invention. In this variant, the head 28 of the connecting rod 23 lacks the pins 30 and the friction linings 16 and 17 facing the friction linings 31 lack slits, as do the arm 13 of the cranked lever 7 and the support plate 19 carrying these linings 16 and 17. Two lateral guides 33 are disposed on the sides of the arm 13 facing corresponding lateral guides 34 carried by the sides of the head 28 of the connecting rod 23.

## Claims

1. Friction damper for suspensions between a supporting part and a suspended part of a railway vehicle including an elastic member interposed between the supporting and suspended parts, and comprising a cranked rocker lever (7) articulated centrally to one of the supporting or suspended parts (2, 1) about a first axis (A) and having a first arm (11) which acts as a support for one end of the elastic member (4) on the supporting or suspended part (2, 1) to which the cranked lever (7) is articulated, and a second arm (13) carrying a first friction lining (16) which faces a second friction lining (17), characterised in that the second friction lining (17) is carried by a support (19, 10) fixed to the supporting or suspended part (2, 1) to which the cranked lever (7) is articulated, and in that it further comprises a substantially vertical connecting rod (23) having one end (24) articulated to the other of the suspended or supporting parts (1, 2) about a second axis (B) and its opposite end (28) connected rotatably and vertically slidably to the second arm (13) of the cranked lever (7) and to the support (19, 10) and carrying third and fourth friction linings (31) which cooperate respectively with the first and the second friction linings (16, 17) during vertical translational movements and rotations of the connecting rod (23) resulting from vertical and transverse relative motions between the suspended and supporting parts (1, 2), so as to damp these motions in a manner which is differentiated and variable as a function of the load transmitted to the cranked lever (7) by the elastic member (4) of the suspension (3).

2. Damper according to Claim 1, characterised in that the end (28) of the connecting rod (23) carrying the third and fourth friction linings (31) has two opposite flat faces (29) which face the first and second friction linings (16, 17) and from which project two pins (30) parallel to the articulation axis (B) of the other end (24) of the connecting rod (23) and rotatably and slidably inserted in respective corresponding guide slits (15, 18, 14, 20) formed in the first friction lining (16), in the second arm (13) of the cranked lever (7), in the second friction lining (17) and in its support (19, 10); the third and fourth friction linings (31) having an annular configuration and being fitted to the opposite flat faces (29) around the respective pins.

3. Damper according to Claim 1, characterised in that the articulation of the end (24) of the connecting rod (23) opposite the one (28) carrying the third and fourth friction linings (31) is a cylindrical articulation (24, 25).

4. Damper according to Claim 1, characterised in that the end (28) of the connecting rod (23) carrying the third and fourth friction linings (31) is provided with lateral guide elements (34) cooperating with corresponding lateral guide elements (33) carried by the second arm (13) of the cranked lever (7).

5. Damper according to any one of the preceding claims, characterised in that the suspended part (1) is constituted by the body of the vehicle or by the body of the vehicle together with the chassis of the carriage, and the supporting part (2) is constituted by the chassis of the carriage of the vehicle or by the housing with axle boxes.

6. Damper according to any of Claims 1 to 4, characterised in that the suspended part (1) is constituted by the body of the vehicle and the supporting part (2) is constituted by the axles of the vehicle.

## Patentansprüche

1. Reibungsstoßdämpfer für Aufhängungen zwischen einem tragenden Teil und einem abgehängten Teil eines Schienenfahrzeugs mit einem elastischen Element, das zwischen dem tragenden und dem abgehängten Teil liegt, wobei der Stoßdämpfer einen Gelenkshebel (7), der am tragenden oder am abgehängten Teil (2, 1) um eine erste Achse (A) zentrisch gelenkig gelagert ist und einen ersten Arm (11) besitzt, der als Halterung für ein Ende des elastischen Elements (4) auf dem tragenden oder dem abgehängten Teil (2, 1) dient, an dem der Gelenkshebel (7) gelenkig befestigt ist, sowie einen zweiten Arm (13) besitzt, der einen ersten Reibungsbelag (16) trägt, der einem zweiten Reibungsbelag (17) gegenüberliegt, dadurch gekennzeichnet, daß der zweite Reibungsbelag (17) von einer Halterung (19, 10) getragen wird, die am tragenden oder am abgehängten Teil (2, 1) befestigt ist, mit dem der Gelenkshebel (7) gelenkig verbunden ist; und daß der Stoßdämpfer weiters eine im wesentlichen senkrechte Verbindungsstange (23) besitzt, von der ein Ende (24) am anderen Teil des abgehängten oder tragenden Teils (1, 2) in einer zweiten Achse (B) gelenkig gelagert ist, wobei ihr gegenüberliegendes Ende (28) mit dem zweiten Arm (13) des Gelenkshebels (7) sowie mit der Halterung (19, 10) drehbar und senkrecht verschiebbar verbunden ist und einen dritten und vierten Reibungsbelag (31) trägt, die mit dem ersten bzw. zweiten Reibungsbelag (16, 17) während vertikalen Translationsbewegungen und Drehungen der Verbindungsstange (23) zusammenwirken, die von vertikal- und querverlaufenden Relativbewegungen zwischen dem abgehängten und dem tragenden Teil (1, 2) stammen, um diese Bewegungen auf eine Art zu dämpfen, die als Funktion jener Last unterschieden wird und veränderbar ist, die vom elastischen Element (4) der Aufhängung (3) auf den Gelenkshebel (7) übertragen wird.

2. Stoßdämpfer gemäß Anspruch 1, dadurch gekennzeichnet, daß das Ende (28) der Verbindungsstange (23), die den dritten und vierten Reibungsbelag (31) trägt, zwei gegenüberliegende ebene Flächen (29) besitzt, die dem ersten und zweiten Reibungsbelag (16, 17) gegenüberliegen und von denen zwei Zapfen (30) parallel zur Gelenksachse (B) des anderen Endes (24) der Verbindungsstange (23) vorspringen und drehbar sowie verschiebbar in entsprechende Führungsschlitze (15, 18, 14, 20) eingesetzt werden, die im ersten Reibungsbelag (16), im zweiten Arm (13) des Gelenkshebels (7), im zweiten Reibungsbelag (17) sowie in ihrer Halterung (19, 10) ausgebildet sind; wobei der dritte und vierte Reibungsbelag (31) einen ringförmigen Aufbau besitzen und an den gegenüberliegenden ebenen Flächen (29) um die entsprechenden Zapfen sitzen.

3. Stoßdämpfer gemäß Anspruch 1, dadurch gekennzeichnet, daß die Gelenksverbindung des Endes (24) der Verbindungsstange (23) gegenüber dem einen Ende (28), das den dritten und vierten Reibungsbelag (31) trägt, eine zylindrische Gelenksverbindung (24, 25) ist.

4. Stoßdämpfer gemäß Anspruch 1, dadurch gekennzeichnet, daß das Ende (28) der Verbindungsstange (23), das den dritten und vierten Reibungsbelag (31) trägt, mit seitlichen Führungselementen (34) versehen ist, die mit entsprechenden seitlichen Führungselementen (33) zusammenwirken, die vom zweiten Arm (13) des Gelenkshebels (7) getragen werden.

5. Stoßdämpfer gemäß jedem der bisherigen Ansprüche, dadurch gekennzeichnet, daß der abgehängte Teil (1) vom Körper des Fahrzeugs oder dem Körper des Fahrzeugs zusammen mit dem Chassis des Fahrgestells gebildet wird, und daß der tragende Teil (2) vom Chassis des Fahrgestells des Wagens oder vom Gehäuse mit den Lagerschalen gebildet wird.

6. Stoßdämpfer gemäß jedem der Ansprüche 1 bis 4, dadurch gekennzeichnet, daß der abgehängte Teil (1) vom Körper des Fahrzeugs und der tragende Teil (2) von den Achsen des Fahrzeugs gebildet wird.

## Revendications

1. Amortisseur à friction pour des suspensions interposées entre une partie porteuse et une partie suspendue d'un véhicule ferroviaire, comprenant un élément élastique interposé entre la partie porteuse et la partie suspendue, et comprenant un levier oscillant coudé (7) articulé en son centre sur l'une des parties porteuse et suspendue (2, 1) pour tourner autour d'un premier axe (A) et possédant un premier bras (11) qui joue le rôle de support pour une extrémité de l'élément élastique (4) sur la partie porteuse ou suspendue (2, 1) à laquelle le levier coudé (7) est articulé, et un deuxième bras (13) qui porte une première garniture de friction (16) qui fait face à une deuxième garniture de friction (17), caractérisé en ce que la deuxième garniture de friction (17) est portée par un support (19, 10) fixé à la partie porteuse ou suspendue (2,1) à laquelle le levier coudé (7) est articulé et en ce qu'elle comprend en outre une bielle (23) sensiblement verticale ayant une extrémité (24) articulée à l'autre des parties suspendue ou porteuse (1, 2) pour tourner autour d'un deuxième axe (B) et son extrémité opposée (28) reliée mobile rotation et en coulissement vertical au deuxième bras (13) du levier coudé (7) et au support (19, 10), et qui porte des troisième et quatrième garnitures de friction (31) qui coopèrent respectivement avec les première et deuxième garnitures de friction (16, 17) pendant les mouvements de translation verticale et les rotations de la bielle (23) qui résultent des mouvements relatifs verticaux et transversaux qui se produisent entre les parties suspendue et porteuse (1, 2), de manière à amortir ces mouvements d'une façon qui est différenciée et qui varie en fonction de la charge transmise au levier coudé (7) par l'élément élastique (4) de la suspension (3).

2. Amortisseur selon la revendication 1, caractérisé en ce que l'extrémité (28) de la bielle (23) qui porte la troisième et la quatrième garnitures de friction (31) possède deux faces planes opposées (29) qui font face aux première et deuxième garnitures de friction (16, 17) et sur lesquelles font saillie deux tourillons (30) disposés parallèlement à l'axe d'articulation (B) de l'autre extrémité (24) de la bielle (23) et qui sont insérés mobiles en rotation et en coulissement dans des fentes de guidage correspondantes respectives (15, 18, 14, 20) formées dans la première garniture de friction (16), dans le deuxième bras (13) du levier coudé (7), dans la deuxième garniture de friction (17) et dans son support (19, 10) ; les troisième et quatrième garnitures de friction (31) ayant une configuration annulaire et étant fixées aux faces planes opposées (29), autour des tourillons respectifs.

3. Amortisseur selon la revendication 1, caractérisé en ce que l'articulation de l'extrémité (24) de la bielle (23) qui est à l'opposé de l'extrémité (28) portée par les troisième et quatrième garnitures de friction (31) est une articulation cylindrique (24, 25).

4. Amortisseur selon la revendication 1, caractérisé en ce que l'extrémité (28) de la bielle (23) qui porte les troisième et quatrième garnitures de friction (31) est équipée d'éléments de guidage latéraux (34) qui coopèrent avec des éléments de guidage latéraux correspondants (33) portés par le deuxième bras (13) du levier coudé (7).

5. Amortisseur selon l'une quelconque des revendications précédentes, caractérisé en ce que la partie suspendue (1) est constituée par la caisse du véhicule ou par.l'ensemble de la caisse du véhicule et du châssis du bogie, et la partie porteuse (2) est constituée par le châssis du bogie du véhicule ou par le boîtier comportant les boîtes d'essieux.

6. Amortisseur selon une quelconque des revendications 1 à 4, caractérisé en ce que la partie suspendue (1) est constituée par la caisse du véhicule et la partie porteuse (2) est constituée par les essieux du véhicule.

FIG. 1

FIG. 2

EP 0 246 200 B1

FIG. 3

FIG. 4

FIG. 5

# FIG. 6

EP 0 246 200 B1

# FIG. 7

FIG. 8